# EUROPÄISCHE PATENTSCHRIFT

(11) **EP 1 201 606 B1**
(45) Veröffentlichungstag und Bekanntmachung des Hinweises auf die Patenterteilung: **15.12.2004**
(21) Anmeldenummer: 01123746.8
(22) Anmeldetag: 04.10.2001
(51) Int. Cl.: C01B 3/38

(54) **Vorrichtung zur Rückführung kondensieter Flüssigkeit in einen Gasstrom**
Apparatus for recirculating condensed liquid in a gas stream
Dispositif pour renvoyer un liquide condensé dans un courant gazeux

(30) Priorität: 24.10.2000 DE 10052606
(43) Veröffentlichungstag der Anmeldung: 02.05.2002
(73) Patentinhaber: Ballard Power Systems AG, 73230 Kirchheim / Teck-Nabern (DE)
(72) Erfinder: Dietl, Jochen-Peter, 71554 Unterweissach (DE)
(74) Vertreter: Beyer, Andreas, Dr.

(56) Entgegenhaltungen:
- DE-A- 3 643 624
- DE-C- 19 533 249
- US-A- 5 980 697
- DATABASE WPI Section PQ, Week 199525 Derwent Publications Ltd., London, GB; Class Q78, AN 1995-192530 XP002187630 & RU 2 022 230 C (APPL MECH RES PRODN ASSOC), 30. Oktober 1994 (1994-10-30)
- DATABASE WPI Section PQ, Week 198346 Derwent Publications Ltd., London, GB; Class Q68, AN 1983-818724 XP002187631 & SU 987 274 A (RYZHKOV S V), 7. Januar 1983 (1983-01-07)

## Beschreibung

Die Erfindung betrifft eine Vorrichtung zur Rückführung einer an der Innenwand eines von einem Gas durchströmten Rohres kondensierten Flüssigkeit in den Gasstrom.

Durchströmt ein Gas oder ein zerstäubtes flüssiges Medium in einem Gas ein Gefäß z.B. ein Rohr, so kondensiert es an Stellen der Gefäßinnenwandung, welche unterhalb des Taupunktes des Gases liegen. Somit kommt es innerhalb des Gefäßes zur Tropfenbildung.

In Brennstoffzellensystemen, in denen als Brennstoff flüssiges Methanol verwendet wird, kommt es bei der Einspritzung von Methanol in Rohren mit anschließenden Rohrbögen zur Tropfenbildung an der Rohrinnenwandung. Diese Tropfen lösen sich schließlich am Ende des Rohrs als große Tropfen ab. Dies hat dann z.B. für einen nachgeschalteten Brenner höhere Emissionen zur Folge.

Aufgabe der Erfindung ist es, eine Vorrichtung zu schaffen, mit der die Bildung großer Tropfen kondensierter Flüssigkeit vermieden und eine Rückführung der kondensierten Flüssigkeit in den Gasstrom erreicht werden kann.

Diese Aufgabe wird durch den Gegenstand des Patentanspruchs 1 gelöst. Ausführungsformen der Erfindung sind Gegenstand weiterer Unteransprüche.

Erfindungsgemäß werden an der Innenwand eines von einem Gas durchströmten Rohres Kapillaren angeordnet, die in den Gasstrom ragen. Die an der Innenwand des Rohres kondensierte Flüssigkeit wird in den Kapillaren transportiert und am offenen Ende der Kapillaren in den Gasstrom zerstäubt. Diese Flüssigkeit kann z.B. Methanol sein.

Aufgrund von Kapillarkräften wird Flüssigkeit in den Kapillaren, welche üblicherweise dünne zylindrische Rohre sind, transportiert. Die Höhe der sich in der Kapillare aufsteigenden Flüssigkeitssäule richtet sich nach der Oberflächenspannung und der Dichte der Flüssigkeit sowie nach dem Durchmesser der Kapillare. Die an der Rohrinnenwandung kondensierte Flüssigkeit wird somit in den Kapillaren von der Rohrinnenwandung in Richtung des offenen Endes transportiert. Am offenen, in den Gasstrom ragenden Ende der Kapillaren zerstäubt die Flüssigkeit in den Gasstrom.

Die Zerstäubung der Flüssigkeit erfolgt dadurch, dass der sich am offenen Ende der Kapillare befindliche Flüssigkeitsfilm von dem Gasstrom mitgerissen wird.

Durch die Gasströmung im Rohr wird der Effekt der Kapillarität und damit der Transport der Flüssigkeit in der Kapillare unterstützt. Hierbei kommt es aufgrund der Rohrströmung im Rohrquerschnitt zu einem Druckgefälle des statischen Drucks, wobei der statische Druck in der Rohrmitte kleiner als der statische Druck an der Rohrinnenwandung ist.

Durch diese Druckdifferenz wird in den Kapillaren ein Unterdruck erzeugt (Venturi-Effekt). Mit zunehmender Strömungsgeschwindigkeit innerhalb des Rohres steigt die statische Druckdifferenz zwischen Rohrmitte und der Innenwandung des Rohres an. Somit kann entsprechend mehr Flüssigkeit innerhalb der Kapillaren transportiert und in den Gasstrom zurückgeführt werden.

Ein Vorteil der erfindungsgemäßen Vorrichtung ist, dass die zerstäubte Flüssigkeit im Gasstrom schneller verdampft werden kann.

Ein weiterer Vorteil der erfindungsgemäßen Vorrichtung ist, dass sich die Rückführung von Flüssigkeit in den Gasstrom, durch den sich in den Kapillaren entsprechend des Gasvolumenstroms und der Strömungsgeschwindigkeit des Gases einstellenden Unterdrucks, automatisch anpasst.

Sofern die physikalischen Randbedingungen, statische Druckdifferenz sowie Siedetemperatur und Viskosität der Flüssigkeit, es erlauben, ist eine Rückführung von Flüssigkeit in einen Gasstrom bei Temperaturen unterhalb von 0°C möglich.

In einer vorteilhaften Ausführung der Erfindung kann die kondensierte Flüssigkeit im Bereich der Kapillaren an der Rohrinnenwand gesammelt werden, z.B. in einer in der Rohrinnenwand angebrachten Nut.

Insbesondere können die Kapillaren senkrecht zur Strömungsrichtung des Gasstroms angeordnet werden. Durch diese Anordnung wird der Venturi-Effekt verstärkt, wodurch der Unterdruck in den Kapillaren vergrößert wird.

Die Kapillaren können vorzugsweise kreissymmetrisch, z.B. kranzförmig, und in Richtung des Rohrmittelpunktes ausgerichtet angeordnet werden. Dadurch ergibt sich eine gleichmäßige Verteilung der zerstäubten Flüssigkeit in dem Gasstrom.

Durch Variation der Kapillarlängen bis zum halben mittleren Rohrdurchmessers sowie durch Variation des Durchmessers der einzelnen Kapillare, kann die Verteilung der zerstäubten Flüssigkeit hinsichtlich einer gleichmäßigen Verteilung in dem Gasstrom weiter verbessert werden. Es ist zum Beispiel möglich, langen Kapillaren mit einem gegenüber kurzen Kapillaren vergrößerten Durchmesser auszubilden.

In einer vorteilhaften Ausführungsform der Erfindung können die Kapillaren in einem einzelnen Rohrstück angeordnet werden. Dieses Rohrstück kann zweckmäßig einen geringeren Durchmesser als die Rohrleitung aufweisen, so dass zwischen dem Rohrstück und der Rohrleitung ein Zwischenraum gebildet wird. In diesem Zwischenraum kann die kondensierte Flüssigkeit gesammelt werden. Das Rohrstück kann dann modular in die Rohrleitung eingesetzt werden, vorzugsweise an solchen Stellen innerhalb der Rohrleitung an denen Flüssigkeit bevorzugt kondensiert, z.B. in oder nach Bögen oder an Verzweigungen.

Der Zwischenraum kann in Strömungsrichtung gesehen, am Ende des Rohrstücks auch abgeschlossen sein, so dass in dem Zwischenraum auskondensierte Flüssigkeit gesammelt werden kann.

Ein bevorzugtes Anwendungsbeispiel der erfindungsgemäße Vorrichtung ist der Einsatz als Methanolzerstäuber in Brennstoffzellensystemen für mobile Anwendungen.

Die Erfindung wird im weiteren anhand von Figuren näher erläutert. Es zeigen:
- Fig. 1: eine erfindungsgemäße Anordnung von Kapillaren in einem Rohr,
- Fig. 2: eine Rohrleitung im Längsschnitt mit eingesetztem Rohrstück, auf dem Kapillaren angeordnet sind.

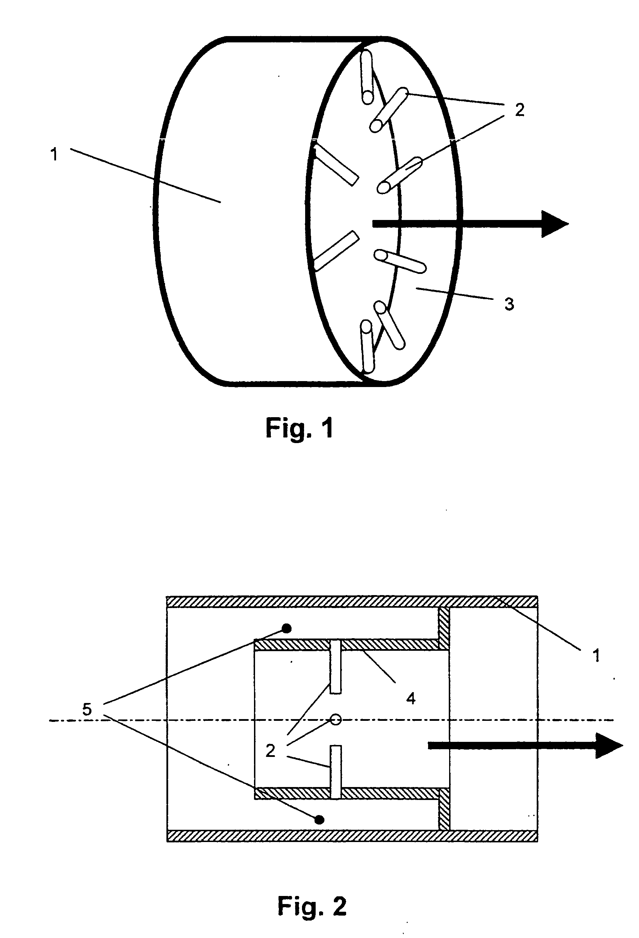

Fig. 1 zeigt eine erfindungsgemäße Anordnung von Kapillaren **2** in einem Rohr **1**, welches von einem gasförmigen Medium durchströmt wird. Die Kapillaren **2** sind üblicherweise dünne zylindrische Rohre.

An der Innenwand des Rohres **1** ist eine Nut **3** angebracht, in welcher die an der Innenwand des Rohres **1** kondensierte Flüssigkeit gesammelt und den Kapillaren **2** zugeführt werden kann.

Die Kapillaren **2** sind an der Innenwand des Rohrs **1** kreissymmetrisch über den gesamten inneren Umfang des Rohres **1** angeordnet und in Richtung des Rohrmittelpunktes ausgerichtet. Die Kapillaren **2** sind an der Innenwand des Rohres **1** in der Nut **3** befes-. tigt. Die Befestigung der Kapillaren 2 kann durch Plasmaschweißen oder durch Schrumpfen, Pressen, Kleben, Quetschen, Reibschweißen, Punktschweißen oder Schweißen in Inertgas erfolgen.

Die Flüssigkeit gelangt dabei durch die der Rohrinnenwand zugewandten Kapillaröffnung in die Kapillaren **2**. Dies kann z.B. dadurch erfolgen, dass die Befestigung der Kapillaren **2** an der Rohrinnenwand nur an bestimmten Umfangsabschnitten der Kapillaröffnung erfolgt und somit zwischen der Nut **3** und dem Innenraum der Kapillare **2** ein Durchgang besteht durch welchen die Flüssigkeit in die Kapillare **2** eintreten kann. Des weitern kann ein bestimmter Längenabschnitt, vorzugsweise im Bereich der Rohrinnenwand, der Kapillaren **2** porös ausgebildet sein.

Die Kapillaren **2** können auch in mehreren Reihen, in Strömungsrichtung gesehen, angeordnet werden und so einen großen Bereich entlang der Rohrinnenwand abdecken. In einer weiteren Ausführung werden die Kapillaren **2** nur an bestimmten Umfangsabschnitten des Rohres **1** angeordnet, z.B. nur im unteren Bereich des Rohrabschnittes, in den die kondensierte Flüssigkeit aufgrund der Schwerkraft bevorzugt fließt.

Fig. 2 zeigt im Längsschnitt eine Rohrleitung **1** mit einem eingesetzten Rohrstück **4**, wobei auf dem Rohrstück **4** die Kapillaren **2** erfindungsgemäß angeordnet sind. Das Rohrstück **4** weist einen geringeren Durchmesser als die Rohrleitung **1** auf, wodurch zwischen dem Rohrstück **4** und der Rohrleitung **1** ein ringspaltförmiger Zwischenraum **5** gebildet wird. Dieser Zwischenraum **5** ist am Ende des Rohrstücks **4**, in Strömungsrichtung gesehen, abgeschlossen. Die kondensierte Flüssigkeit kann in dem Zwischenraum **5** gesammelt werden. Dadurch wird der Zwischenraum **5** mit Flüssigkeit gefüllt. Durch die Kapillaren **2** kann somit eine große Menge an Flüssigkeit in den Gasstrom transportiert werden.

## Patentansprüche

1. Vorrichtung zur Rückführung einer an der Innenwand eines von einem Gas durchströmten Rohres (1) kondensierten Flüssigkeit in den Gasstrom, **dadurch gekennzeichnet, dass** an der Innenwand des Rohres (1) Kapillaren (2) angeordnet sind, welche in den Gasstrom ragen.

2. Vorrichtung nach Anspruch 1, **dadurch gekennzeichnet, dass** an der Innenwand des Rohres (1), im Bereich der Kapillaren (2), eine Nut (3) vorhanden ist, in der die kondensierte Flüssigkeit gesammelt wird.

3. Vorrichtung nach Anspruch 1 oder 2, **dadurch gekennzeichnet, dass** die Kapillaren (2) senkrecht zur Strömungsrichtung des Gasstroms ausgerichtet sind, vorzugsweise kreissymmetrisch in Richtung des Rohrmittelpunktes.

4. Vorrichtung nach einem der vorangehenden Ansprüche, **dadurch gekennzeichnet, dass** zur homogenen Verteilung der Flüssigkeit im Gasstrom die Länge der Kapillaren (2) variiert, vorzugsweise maximal bis zum halben mittleren Rohrdurchmessers.

5. Vorrichtung nach einem der vorangehenden Ansprüche, **dadurch gekennzeichnet, dass** die Kapillaren (2) in einem einzelnen Rohrstück (4) angeordnet sind, das modular in eine bestehende Rohrleitung (1) eingesetzt werden kann, so dass zwischen dem Rohrstück (4) und der Rohrleitung (1) ein Zwischenraum (5) vorhanden ist, in dem die kondensierte Flüssigkeit gesammelt werden kann.

6. Vorrichtung nach Anspruch 5, **dadurch gekennzeichnet, dass** der Zwischenraum (5) am Ende des Rohrstücks (4) abgeschlossen ist.

## Claims

1. Device for recycling a liquid condensed at the interior wall of a tube (1), through which a gas flows, into the gas flow, **characterized in that** capillaries (2) are disposed at the interior wall of the tube (1), which capillaries protrude into the gas flow.

2. Device according to claim 1, **characterized in that** a groove (3) is provided at the interior wall of the tube (1) in the region of the capillaries (2), in which groove the condensed liquid is collected.

3. Device according to any one of claims 1 or 2, **characterized in that** the capillaries (2) are oriented perpendicularly to the direction of flow of the gas flow, preferably circularly symmetrically towards the center of the tube.

4. Device according to any one of the preceding claims, **characterized in that** for homogeneous distribution of the liquid within the gas flow the length of the capillaries (2) varies, preferably to a maximum of half of the average tube diameter.

5. Device according to any one of the preceding claims, **characterized in that** the capillaries (2) are disposed within one single tube section (4), which can be modularly inserted into an existing tubing (1) such that a space (5) is provided between the tube section (4) and the tubing (1), in which the condensed liquid can be collected.

6. Device according to claim 5, **characterized in that** the space (5) is closed at the end of the tube section (4).

## Revendications

1. Dispositif pour renvoyer dans le courant gazeux un liquide condensé sur la paroi interne d'un tube (1) traversé par un gaz, **caractérisé en ce que** des capillaires (2) faisant saillie dans le courant gazeux sont agencés sur la paroi interne du tube (1).

2. Dispositif selon la revendication 1, **caractérisé en ce qu'**il est aménagé sur la paroi interne du tube (1), dans la zone des capillaires (2), une rainure (3) servant à la collecte du liquide condensé.

3. Dispositif selon la revendication 1 ou 2, **caractérisé en ce que** les capillaires (2) sont orientés perpendiculairement au sens d'écoulement du courant gazeux, de préférence symétriquement vers le centre du tube.

4. Dispositif selon l'une des revendications précédentes, **caractérisé en ce que** la longueur des capillaires (2) varie, de préférence au plus jusqu'au demi-diamètre moyen du tube, pour permettre la répartition homogène du liquide dans le courant gazeux.

5. Dispositif selon l'une des revendications précédentes, **caractérisé en ce que** les capillaires (2) sont agencés dans un tronçon de tube (4) pouvant être inséré comme un module à l'intérieur d'une conduite (1) existante, si bien que le tronçon de tube (4) et la conduite (1) sont séparés par un espace intermédiaire (5) permettant la collecte du liquide condensé.

6. Dispositif selon la revendication 5, **caractérisé en ce que** l'espace intermédiaire (5) est fermé à l'extrémité du tronçon de tube (4).
